(19) Europäisches Patentamt
European Patent Office
Office européen des brevets

(11) EP 3 845 056 A1

(12) EUROPEAN PATENT APPLICATION
published in accordance with Art. 153(4) EPC

(43) Date of publication:
**07.07.2021 Bulletin 2021/27**

(21) Application number: **19853679.9**

(22) Date of filing: **25.07.2019**

(51) Int Cl.:
***A01G 9/24*** *(2006.01)* ***A01G 9/18*** *(2006.01)*
***A01G 7/04*** *(2006.01)* ***A01G 7/02*** *(2006.01)*
***A01G 9/20*** *(2006.01)*

(86) International application number:
**PCT/KR2019/009277**

(87) International publication number:
**WO 2020/045829 (05.03.2020 Gazette 2020/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **30.08.2018 KR 20180102622**
**30.08.2018 KR 20180119163**

(71) Applicant: **G+Flas Life Sciences**
**Seoul 08790 (KR)**

(72) Inventor: **PARK, Gwang Man**
**Seoul 08792 (KR)**

(74) Representative: **Vossius & Partner**
**Patentanwälte Rechtsanwälte mbB**
**Siebertstraße 3**
**81675 München (DE)**

# (54) SYSTEM FOR CONTROLLING ENVIRONMENT OF AIR CONDITIONER-TYPE CLOSED PLANT FACTORY AND CONTROL METHOD THEREOF

(57) An equipment for controlling an environment of a closed plant factory, according to the present invention, has advantages in that energy can be saved while maintaining an optimal environment for producing plants for pharmaceutical preparation by means of suitable introduction of outdoor air, and a comfortable environment can be provided to workers as well as plants in a daytime mode. In addition, it is possible to save energy by controlling the introduction of outdoor air in consideration of $CO_2$ concentration in the daytime mode in which the plants carry out photosynthesis, and by cooling using outdoor air in a night mode in which the plants breathe and there are no effects from $CO_2$. In addition, when indoor $CO_2$ concentration is within a range between upper and lower limits, since the introduction of outdoor air is controlled by a difference in enthalpy between the indoor air and the outdoor air, outdoor air can be suitably introduced, and the outdoor air can be used for cooling, thereby saving energy.

FIG. 5

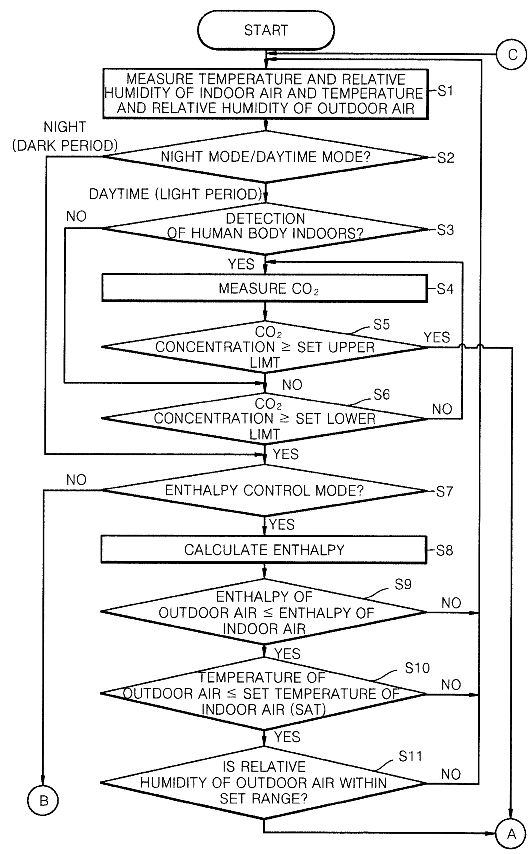


EP 3 845 056 A1

## Description

TECHNICAL FIELD

The present invention relates to a system for controlling an environment of an air conditioner-type closed plant factory and a control method thereof, and more particularly, to a system for controlling an environment of an air conditioner-type closed plant factory, wherein an optimal indoor environment can be provided considering all of plants for pharmaceutical preparation and workers in a closed plant factory and energy can be saved, and a control method thereof.

BACKGROUND ART

In order to produce plants for pharmaceutical preparation, a closed plant factory method is used to artificially control a cultivation environment and to prevent external infection or invasion of pests by bacteria, viruses, fungi, etc., and is also called a bio clean room.
Since the closed plant factory is mainly for producing plants for pharmaceutical preparation, it is very important to maintain the indoor environment under preset conditions.
However, in the closed plant factory, when only plant cultivation conditions are considered, the work environment of the worker becomes poor, thereby reducing work efficiency.
In addition, since the closed plant factory uses artificial lighting instead of sunlight, an internal heat generation load due to the artificial lighting is very large, and thus a cooling load is very large and energy consumption is very large.

DETAILED DESCRIPTION OF THE INVENTION

TECHNICAL PROBLEM

The present invention provides a system for controlling an environment of an air conditioner-type closed plant factory, wherein an optimal indoor environment can be provided considering all of plants for pharmaceutical preparation and workers, and a control method thereof.

TECHNICAL SOLUTION

According to an aspect of the present invention, there is provided a system for controlling an environment of an air conditioner-type closed plant factory in which a plurality of tray members for accommodating plants for pharmaceutical preparation are stacked and which is provided with artificial lighting for providing light energy to the plants, the system including: an outdoor air damper installed in an air supply duct for supplying air to a room of the closed plant factory and configured to control an inflow flow rate of an outdoor air introduced into the air supply duct; an exhaust damper installed in an exhaust duct for discharging air from the room and configured to control a flow rate of an indoor air discharged from the room; a circulating air damper installed in a connection duct for connecting the air supply duct and the exhaust duct and configured to control a flow rate of circulating air that is discharged from the room and then circulated back to the room; a $CO_2$ supply device configured to supplying $CO_2$ to the air introduced into the room; a humidification coil configured to humidify the air introduced into the room; a cold and hot water coil configured to heat or cool the air introduced into the room; an outdoor air sensor unit including an outdoor air temperature sensor measuring a temperature of the outdoor air, an outdoor air humidity sensor measuring a relative humidity of the outdoor air, and an outdoor air $CO_2$ sensor measuring a $CO_2$ concentration of the outdoor air; an indoor sensor unit including an indoor temperature sensor measuring a temperature of the indoor air, an indoor humidity sensor measuring a relative humidity of the indoor air, and an indoor $CO_2$ sensor measuring a $CO_2$ concentration of the indoor air; a human body detection sensor configured to detect a human body in the room; and a control unit, in a daytime mode in which the artificial lighting is turned on and the plants carry out photosynthesis, the human body is detected by the human body detection sensor, and when the $CO_2$ concentration measured by the indoor $CO_2$ sensor is higher than a pre-set upper limit, configured to perform an outdoor air introduction control mode in which ventilation is performed by setting an outdoor air introduction rate differently according to a difference between the temperature of the indoor air and the temperature of the outdoor air.
According to another aspect of the present invention, there is provided a system for controlling an environment of an air conditioner-type closed plant factory in which a plurality of tray members for accommodating plants for pharmaceutical preparation are stacked and which is provided with artificial lighting for providing light energy to the plants, the system including: an outdoor air damper installed in an air supply duct for supplying air to a room of the closed plant factory and configured to control an inflow flow rate of an outdoor air introduced into the air supply duct; an exhaust damper installed in an exhaust duct for discharging air from the room and configured to control a flow rate of an indoor air discharged from the room; a circulating air damper installed in a connection duct for connecting the air supply duct and the exhaust duct and configured to control a flow rate of circulating air that is discharged from the room and then circulated back to the room; a $CO_2$ supply device configured to supplying $CO_2$ to the air introduced into the room; a humidification coil configured to humidify the air introduced into the room; a cold and hot water coil configured to heat or cool the air introduced into the room; an outdoor air sensor unit including an outdoor air temperature sensor measuring a temperature of the outdoor air, an outdoor air humidity sensor measuring a relative humidity of the outdoor air, and an outdoor air $CO_2$ sensor measuring a $CO_2$ concentration of the outdoor air; an indoor sensor unit including an indoor temperature sensor measuring a temperature of the indoor air, an indoor humidity sensor measuring a relative humidity of the indoor air, and an indoor $CO_2$ sensor measuring a $CO_2$ concentration of the indoor air; a human body detection sensor configured to detect a human body in the room; and a control unit, in a night mode in which the artificial lighting is turned off and the plants breathe, configured to determine whether any one of an enthalpy control mode in which the outdoor air is introduced by comparing enthalpy of the indoor air with enthalpy of the outdoor air, and an indoor circulation mode in which the indoor air is circulated without introducing the outdoor air, is set and configured to control ventilation in the set mode.

According to another aspect of the present invention, there is provided a system for controlling an environment of an air conditioner-type closed plant factory in which a plurality of tray members for accommodating plants for pharmaceutical preparation are stacked and which is provided with artificial lighting for providing light energy to the plants, the system including: an outdoor air damper installed in an air supply duct for supplying air to a room of the closed plant factory and configured to control an inflow flow rate of an outdoor air introduced into the air supply duct; an exhaust damper installed in an exhaust duct for discharging air from the room and configured to control a flow rate of an indoor air discharged from the room; a circulating air damper installed in a connection duct for connecting the air supply duct and the exhaust duct and configured to control a flow rate of circulating air that is discharged from the room and then circulated back to the room; a $CO_2$ supply device configured to supplying $CO_2$ to the air introduced into the room; a humidification coil configured to humidify the air introduced into the room; a cold and hot water coil configured to heat or cool the air introduced into the room; an outdoor air sensor unit including an outdoor air temperature sensor measuring a temperature of the outdoor air, an outdoor air humidity sensor measuring a relative humidity of the outdoor air, and an outdoor air $CO_2$ sensor measuring a $CO_2$ concentration of the outdoor air; an indoor sensor unit including an indoor temperature sensor measuring a temperature of the indoor air, an indoor humidity sensor measuring a relative humidity of the indoor air, and an indoor $CO_2$ sensor measuring a $CO_2$ concentration of the indoor air; a human body detection sensor configured to detect a human body in the room; and a control unit configured to control ventilation of the closed plant factory by reflecting whether the artificial lighting is turned on or off and whether the human body is detected by the human body detection sensor.

According to another aspect of the present invention, there is provided a system for controlling an environment of an air conditioner-type closed plant factory in which a plurality of tray members for accommodating plants for pharmaceutical preparation are stacked and which is provided with artificial lighting for providing light energy to the plants, the system including: an outdoor air damper installed in an air supply duct for supplying air to a room of the closed plant factory and configured to control an inflow flow rate of an outdoor air introduced into the air supply duct; an exhaust damper installed in an exhaust duct for discharging air from the room and configured to control a flow rate of an indoor air discharged from the room; a circulating air damper installed in a connection duct for connecting the air supply duct and the exhaust duct and configured to control a flow rate of circulating air that is discharged from the room and then circulated back to the room; a $CO_2$ supply device configured to supplying $CO_2$ to the air introduced into the room; a humidification coil configured to humidify the air introduced into the room; a cold and hot water coil configured to heat or cool the air introduced into the room; an outdoor air sensor unit including an outdoor air temperature sensor measuring a temperature of the outdoor air, an outdoor air humidity sensor measuring a relative humidity of the outdoor air, and an outdoor air $CO_2$ sensor measuring a $CO_2$ concentration of the outdoor air; an indoor sensor unit including an indoor temperature sensor measuring a temperature of the indoor air, an indoor humidity sensor measuring a relative humidity of the indoor air, and an indoor $CO_2$ sensor measuring a $CO_2$ concentration of the indoor air, a human body detection sensor configured to detect a human body in the room; and a control unit configured to control ventilation of the closed plant factory by reflecting whether the artificial lighting is turned on or off, whether the human body is detected by the human body detection sensor, and the $CO_2$ concentration measured by the indoor $CO_2$ sensor.

According to another aspect of the present invention, there is provided a system for controlling an environment of an air conditioner-type closed plant factory in which a plurality of tray members for accommodating plants for pharmaceutical preparation are stacked and which is provided with artificial lighting for providing light energy to the plants, the system including: an outdoor air damper installed in an air supply duct for supplying air to a room of the closed plant factory and configured to control an inflow flow rate of an outdoor air introduced into the air supply duct; an exhaust damper installed in an exhaust duct for discharging air from the room and configured to control a flow rate of an indoor air discharged from the room; a circulating air damper installed in a connection duct for connecting the air supply duct and the exhaust duct and configured to control a flow rate of circulating air that is discharged from the room and then circulated back to the room; a $CO_2$ supply device configured to supplying $CO_2$ to the air introduced into the room; a humidification coil configured to humidify the air introduced into the room; a cold and hot water coil configured to heat or cool the air introduced into the room; an outdoor air sensor unit including an outdoor air temperature sensor measuring a temperature of the outdoor air, an outdoor air humidity sensor measuring a relative humidity of the outdoor air, and an outdoor air $CO_2$ sensor measuring a $CO_2$ concentration of the outdoor air; an indoor sensor unit including an indoor temperature sensor measuring a temperature of the indoor air, an indoor humidity sensor measuring a relative humidity of the indoor air, and an indoor $CO_2$ sensor measuring a $CO_2$ concentration of the indoor air; a human body detection sensor configured to detect a human body in the room; and a control unit configured to control ventilation of the closed plant factory by reflecting whether the artificial lighting is turned on or off, whether the human body is detected by the human body detection sensor, the enthalpy of the indoor air, and the enthalpy of the outdoor air.

According to an aspect of the present invention, there is provided a method of controlling an environment of an air conditioner-type closed plant factory, the method including: when a closed plant factory for cultivating plants for pharmaceutical preparation is controlled in an air-conditioner type by including an outdoor air damper installed in an air supply duct for supplying air to a room of the closed plant factory and configured to control an inflow flow rate of an outdoor air introduced into the air supply duct, an exhaust damper installed in an exhaust duct for discharging air from the room and configured to control a flow rate of an indoor air discharged from the room, a circulating air damper installed in a connection duct for connecting the air supply duct and the exhaust duct and configured to control a flow rate of circulating air that is discharged from the room and then circulated back to the room, a $CO_2$ supply device configured to supplying $CO_2$ to the air introduced into the room, a humidification coil installed in the air supply duct and configured to humidify the air introduced into the room, and a cold and hot water coil installed in the air supply duct and configured to heat or cool the air introduced into the room, a temperature/humidity measuring operation of measuring temperature and relative humidity of the indoor air at predetermined time intervals and measuring temperature and relative humidity of the outdoor air of the closed plant factory at predetermined time intervals, by using a sensor unit; a night/daytime setting operation of setting any one of a daytime mode in which an artificial lighting provided in the room of the closed plant factory is turned on and photosynthesis of the plants is carried out, and a night mode in which the artificial lighting is turned off and only breathing of the plants is carried out, by using a control unit; a human body detecting operation of determining whether a human body is detected by a human body detection sensor in the room when the daytime mode is set in the night/daytime setting operation; a $CO_2$ concentration measuring operation of measuring $CO_2$ concentration of the indoor air at predetermined time intervals when the human body is detected in the human body detecting operation, by using a $CO_2$ sensor; an operation of performing an outdoor air introduction control mode in which the control unit sets an outdoor air introduction rate differently according to a difference between temperature of the indoor air and temperature of the outdoor air and performs ventilation, when the $CO_2$ concentration of the indoor air measured in the $CO_2$ concentration measuring operation is greater than or equal to a pre-set upper limit; an enthalpy control mode checking operation of checking whether any one of an enthalpy control mode in which the outdoor air is introduced by comparing enthalpy of the indoor air with enthalpy of the outdoor air and an indoor circulation mode in which the indoor air is circulated without introducing the outdoor air, is set when the $CO_2$ concentration of the indoor air measured in the $CO_2$ concentration measuring operation is less than the upper limit and is greater than or equal to a pre-set lower limit; when it is determined that the enthalpy control mode is set in the enthalpy control mode checking operation, calculating enthalpy of the indoor air and enthalpy of the outdoor air and determining whether to perform the outdoor air introduction control mode according to the enthalpy of the indoor air, the enthalpy of the outdoor air, the temperature of the outdoor air, and the relative humidity of the outdoor air; and when the night mode is set in the night/daytime setting operation, checking whether any one of the enthalpy control mode and the indoor circulation mode is set, by using the control unit.

EFFECTS OF THE INVENTION

An equipment for controlling an environment of a closed plant factory, according to the present invention, has advantages in that energy can be saved while maintaining an optimal environment for producing plants for pharmaceutical preparation by means of suitable introduction of outdoor air, and a comfortable environment can be provided to workers as well as plants in a daytime mode.

In addition, it is possible to save energy by controlling the introduction of outdoor air in consideration of $CO_2$ concentration in the daytime mode in which the plants carry out photosynthesis, and by cooling using outdoor air in a night mode in which the plants breathe and there are no effects from $CO_2$.

In addition, when indoor $CO_2$ concentration is within a range between upper and lower limits, the introduction of outdoor air is controlled by a difference in enthalpy between the indoor air and the outdoor air, so that outdoor air can be suitably introduced, and the outdoor air can be used for cooling, thereby saving energy.

DESCRIPTION OF THE DRAWINGS

FIG. 1 is a view illustrating a system for controlling an environment of an air conditioner-type closed plant factory according to a first embodiment of the present invention.

FIG. 2 is a block diagram illustrating the configuration of the system for controlling an environment of an air conditioner-type closed plant factory shown in FIG. 1.

FIG. 3 is a view illustrating a system for controlling an environment of a packaged thermo-hygrostat type closed plant factory according to a second embodiment of the present invention.

FIG. 4 is a block diagram illustrating the configuration of the system for controlling an environment of a packaged thermo-hygrostat type closed plant factory shown in FIG. 3.

FIGS. 5 through 7 are flowcharts illustrating a method of controlling an environment of a closed plant factory according to an embodiment of the present invention.

MODE OF THE INVENTION

Hereinafter, embodiments of the present invention will be described below with reference to the accompanying drawings.

A closed plant factory according to an embodiment of the present invention is a facility for cultivating plants for pharmaceutical preparation (hereinafter, referred to as 'plants'). The closed plant factory is sealed to control the optimal environment for cultivating the plants and to prevent invasion of external infections or pests. Because the closed plant factory controls the environment for the plants, the temperature is about 25°C, the humidity is 40 to 80%, and the $CO_2$ concentration is controlled at 800 to 1500 ppm, and because the closed plant factory has conditions different from the room that air-conditions for humans, environmental control is also different.

In the room R of the closed plant factory, artificial lighting (not shown) is provided to provide light energy to the plants so that the plants carry out photosynthesis. Because the artificial lighting (not shown) needs to provide photosynthetic energy required for the growth of the plants, the artificial lighting (not shown) needs to have a very high illumination density. The artificial lighting may have an illumination density of about $200W/m^2$. Therefore, the closed plant factory has a large internal heating load due to the artificial lighting and a very large cooling load due to the internal heating load, so it is necessary to control the temperature and humidity of indoor air by using an air conditioner type or a packaged thermo-hygrostat type.

In the room R of the closed plant factory, a plurality of tray members in which the plants P are accommodated, are stacked.

The plants include plants grown hydroponically, such as ventamiana. The plants are used to infiltrate plant tissues with Agrobacterium transformed with a gene encoding a protein in order to induce transient expression of a foreign protein in the plant. The closed plant factory may also be equipped with a device for injecting an infiltrating solution into the tissue of the plant.

FIG. 1 is a view showing a system for controlling an environment of an air conditioner-type closed plant factory according to a first embodiment of the present invention. FIG. 2 is a block diagram showing the configuration of the system for controlling an environment of a closed plant factory shown in FIG. 1.

Referring to FIGS. 1 and 2, the system for controlling an environment of a closed plant factory is an air conditioner-type system.

In an air conditioner type, outdoor air is introduced, the outdoor air is cooled or heated, humidified or dehumidified, and then supplied to the room.

The system for controlling an environment of an air conditioner-type closed plant factory includes an air supply duct 10, an outdoor air damper 11, an air supply fan 12, an exhaust duct 20, an exhaust damper 21, an exhaust fan 22, and a connection duct 30, a circulating air damper 31, a $CO_2$ supply device 40, a humidification coil 42, a cold and hot water coil 44, a reheating coil 46, a HEPA filter 48, an outdoor air sensor unit 50, an indoor sensor unit 60, a human body detection sensor 70, and a control unit 80.

The air supply duct 10 is a flow path for supplying the outdoor air or mixed air in which outdoor air is mixed with circulating air to the room R.

The outdoor air damper 11 is a damper installed on one side of the air supply duct 10 to control an inflow flow rate of the outdoor air flowing into the air supply duct 10.

The air supply fan 12 is a fan provided inside the air supply duct 10 and blows air supplied to the room R.

The exhaust duct 20 is a flow path for discharging air from the room R.

The exhaust damper 21 is installed on one side of the exhaust duct 20 and is a damper that controls the flow rate of the indoor air discharged from the exhaust duct 20.

The exhaust fan 22 is provided inside the exhaust duct 20 and blows air discharged from the room R.

The connection duct 30 is a flow path connecting the air supply duct 10 and the exhaust duct 20 to circulate a portion of the indoor air discharged through the exhaust duct 20 to the air supply duct 10.

The circulating air damper 31 is a damper provided inside the connection duct 30 and controlling a flow rate of circulating air that is discharged from the room R and then circulated back to the room.

The $CO_2$ supply device 40 is a device installed in the air supply duct 10 to supply $CO_2$ to the air introduced into the room. Because the plants need $CO_2$ for photosynthesis, the $CO_2$ supply device 40 may supply $CO_2$ as needed.

The humidification coil 42 is a device installed inside the air supply duct 10 to humidify the air introduced into the room. The humidification coil 42 is provided between the cold and hot water coil 44 and the $CO_2$ supply device 40.

The cold and hot water coil 44 is a device installed in the air supply duct 10 to heat or cool the air introduced into the room.

The reheating coil 46 is a device installed on a flow path connecting the air supply duct 10 and the room R, and reheats air that has been supercooled during a cooling and dehumidification process in the air supply duct 10.

The HEPA filter 48 is installed on a flow path connecting the air supply duct 10 and the room R to filter air supplied to the room R.

The outdoor air sensor unit 50 includes an outdoor air temperature sensor 51 installed in the air supply duct 10 to measure the temperature of the outdoor air, an outdoor air humidity sensor 52 that measures the relative humidity of the outdoor air, and an outdoor air $CO_2$ sensor 53 that measures the $CO_2$ concentration of the outdoor air.

The indoor sensor unit 60 is installed in the exhaust duct 20 and includes an indoor temperature sensor 61 for measuring the temperature of the indoor air discharged from the room R, an indoor humidity sensor 62 for measuring the relative humidity of the indoor air, and an indoor $CO_2$ sensor 63 for measuring the $CO_2$ concentration of the indoor air.

The human body detection sensor 70 is installed in the room R to detect a human body existing in the room R. Because the environment of the room R is normally controlled by considering only the plants, the environment for the human body should also be considered when a person such as a worker enters and exits, and the environment of the room R may change due to the human body. Therefore, the human body detection sensor 70 for detecting the presence of the human body should be provided.

In addition, a mixed air temperature sensor 72 for measuring the temperature of the mixed air in which the indoor air and the outdoor air are mixed, may be installed at a location where the indoor air and the outdoor air introduced through the connection duct 30 are mixed, within the air supply air duct 10.

The control unit 80 controls the operations of the outdoor air damper 11, the exhaust damper 21, and the circulating air damper 31 according to whether the artificial light (not shown) is turned on, and detection signals of the human body detection sensor 70, the indoor $CO_2$ sensor 63, the indoor temperature sensor 61, the indoor humidity sensor 62, the outdoor air temperature sensor 51, the outdoor air humidity sensor 52, the outdoor air $CO_2$ sensor 53, and the mixed air temperature sensor 72, thereby performing indoor environmental control in any one of an outdoor air introduction control mode, an enthalpy control mode, and an indoor circulation mode.

FIG. 3 is a view showing a system for controlling an environment of a packaged thermo-hygrostat type closed plant factory according to a second embodiment of the present invention. FIG. 4 is a block diagram showing the configuration of a system for controlling an environment of a closed plant factory shown in FIG. 3.

Referring to FIGS. 3 and 4, the system for controlling an environment of a closed plant factory according to the second embodiment of the present invention is different from the first embodiment in that the system for controlling an environment of a closed plant factory according to the second embodiment of the present invention is a packaged thermo-hygrostat type system.

A packaged thermo-hygrostat type is a method, whereby a thermo-hygrostat 100 is installed in the room R of the closed plant factory, and the thermo-hygrostat 100 supplies air conditioned to a pre-set temperature and a pre-set humidity. Therefore, in the thermo-hygrostat type, the humidification coil or reheating coil required for the air conditioner type is not separately installed on an outdoor air introduction flow path.

The system for controlling an environment of a closed plant factory includes the thermo-hygrostat 100, an outdoor air damper 110, an air supply fan 112, an exhaust damper 120, an exhaust fan 122, a $CO_2$ supply device 140, a HEPA filter 148, an outdoor air sensor unit 150, an indoor sensor unit 160, a human body detection sensor 170, and a control unit 180.

The outdoor air damper 110 is installed on a flow path for supplying the outdoor air to the room R to control the inflow flow rate of the outdoor air.

The air supply fan 112 is a fan that blows air supplied to the room R.

The exhaust damper 120 is installed on a flow path for discharging the indoor air from the room R, and controls a flow rate of the discharged indoor air.

The exhaust fan 122 is a fan that blows air discharged from the room R.

The $CO_2$ supply device 140 is a device that directly supplies $CO_2$ to the room. Because the plants need $CO_2$ for photosynthesis, the $CO_2$ supply device 140 may supply $CO_2$ as needed.

The HEPA filter 148 is installed on a flow path for supplying outdoor air to the room R, and filters air supplied to the room R. Therefore, external infection or invasion of pests can be prevented.

The outdoor air sensor unit 150 is installed outside the closed plant factory or on a flow path for supplying outdoor air to the room R. The outdoor air sensor unit 150 includes an outdoor air temperature sensor 151 that measures the temperature of the outdoor air, an outdoor air humidity sensor 152 that measures the relative humidity of the outdoor air, and an outdoor air $CO_2$ sensor 153 that measures the $CO_2$ concentration of the outdoor air.

The indoor sensor unit 160 is installed on the room R or on a flow path for discharging indoor air from the room R. The indoor sensor unit 160 includes an indoor temperature sensor 161 that measures the temperature of indoor air discharged from the room R, an indoor humidity sensor 162 that measures the relative humidity of the indoor air, and an indoor $CO_2$ sensor 163 that measures the $CO_2$ concentration of the indoor air.

The human body detection sensor 170 is installed in the room R to detect a human body existing in the room R. Because the environment of the room R is normally controlled by considering only the plant, the environment for the human body should also be considered when a person such as a worker enters and exits, and the environment of the room R may change due to the human body. Therefore, the human body detection sensor 170 for detecting the presence of a human body should be provided.

The control unit 180 performs indoor environmental control in any one of an outdoor air introduction control mode, an enthalpy control mode, and an indoor circulation mode according to whether the artificial light (not shown) is turned on, and detection signals of the human body detection sensor 170, the indoor $CO_2$ sensor 163, the indoor temperature sensor 161, the indoor humidity sensor 162, the outdoor air temperature sensor 151, the outdoor air humidity sensor 152, the outdoor air $CO_2$ sensor 153, and the mixed air temperature sensor 172.

FIGS. 5 through 7 are flowcharts illustrating a method of controlling an environment of a closed plant factory according to an embodiment of the present invention.

The method of controlling an environment of a closed plant factory according to an embodiment of the present invention will be described with reference to FIGS. 5 through 7.

The system for controlling an environment of a closed plant factory has been described by dividing into an air conditioner typed and a packaged thermo-hygrostat type, but a method of controlling the system will be described in an integrated manner.

When the closed plant factory is operated, the room R is maintained at a pre-set temperature and a pre-set humidity.

When the operation of the closed plant factory and environmental control are started, the temperature of the indoor air and the relative humidity of the indoor air, the temperature of the outdoor air, and the relative humidity of the outdoor air are measured at regular time intervals (S1).

In addition, the control unit performs a night/daytime setting operation of setting a night mode/daytime mode (S2).

In the daytime mode, the artificial lighting is turned on so that the plants carry out photosynthesis. In the night mode, the artificial lighting is turned off, so that only the respiration of the plant is performed. Because the closed plant factory is a place where environmental control is performed in consideration of plants, the activity of the plants varies depending on whether the plant is in a daytime mode or a night mode, and thus the control is changed accordingly. In addition, since photosynthesis needs to be carried out in the daytime mode, the $CO_2$ concentration is more important than in the night mode. In addition, because the plants breathe in the night mode, even if the outdoor air is supplied directly, the $CO_2$ concentration required for plant growth is not affected, so that energy saving may be achieved by cooling by using the outdoor air. Therefore, environmental control varies according to the daytime mode and night mode.

In the night/daytime setting operation (S2), when the night mode is set, the $CO_2$ concentration is not measured because the $CO_2$ concentration is not important in the night mode. In the night mode, the control unit may determine whether the enthalpy control mode to be described later is set, and when the enthalpy control mode is set, the control unit may introduce the outdoor air accordingly.

In the night/daytime setting operation (S2), when the daytime mode is set, the control unit performs a human body detecting operation of determining whether a human body is detected in the room (S3).

In the daytime mode, a worker can work while entering and exiting the room R, so that, when the $CO_2$ concentration in the room R is too high, a problem may occur in the worker's breathing, and due to the worker, it may also affect the $CO_2$ concentration of the room R. That is, in the daytime mode, the $CO_2$ concentration of the room R should be controlled not to exceed 1000 ppm. Therefore, in the daytime mode, the human body detecting operation is performed to determine the presence or absence of a worker.

When a human body is detected in the human body detecting operation (S3), a $CO_2$ concentration measuring operation of measuring the $CO_2$ concentration of the indoor air at regular time intervals is performed (S4).

The $CO_2$ concentration of the indoor air measured in the $CO_2$ concentration measuring operation (S4) is compared with a pre-set upper limit (S5).

When the $CO_2$ concentration of the indoor air is greater than or equal to a pre-set upper limit, the control unit performs an outdoor air introduction control mode (S100) for ventilating by setting an outdoor air introduction rate differently according to a difference between the temperature of the indoor air and the temperature of the outdoor air. The outdoor air introduction control mode (S100) will be described in detail later.

When the $CO_2$ concentration of the indoor air measured in the $CO_2$ concentration measuring operation (S4) is less than the upper limit, the $CO_2$ concentration of the indoor air is compared with a pre-set lower limit (S6).

When the $CO_2$ concentration of the indoor air is less than the lower limit, it may be determined that the $CO_2$ concentration of the indoor air is not high and does not affect the working environment of the worker. Therefore, When the $CO_2$ concentration of the indoor air is less than the lower limit, the $CO_2$ concentration is continuously measured and the condition is checked.

On the other hand, when the $CO_2$ concentration of the indoor air is greater than or equal to the lower limit, an enthalpy control mode checking operation to check whether any one of an enthalpy control mode in which the outdoor air is introduced by comparing the enthalpy of the indoor air with the enthalpy of the outdoor air, and an indoor circulation mode in which the indoor air is circulated without introducing the outdoor air, is set, is performed (S7).

On the other hand, when the human body is not detected in the human body detecting operation (S3), the control unit compares the $CO_2$ concentration of the indoor air with a pre-set lower limit (S6).

When the $CO_2$ concentration of the indoor air is greater than or equal to the lower limit, the enthalpy control mode checking operation is performed (S7).

When it is determined that the enthalpy control mode is set in the enthalpy control mode checking operation (S7), the enthalpy of the indoor air and the enthalpy of the outdoor air are calculated (S8).

A method of calculating the enthalpy is shown in Equation 1.

【Equation 1】

$$h=c_a T+(c_v T+r_0)x$$

In Equation 1, T= temperature, $c_a$ is the static pressure specific heat of dry air (1,005J/kg·K, 0.240kcal/kg ·°C), $c_v$ is the static pressure specific heat of steam (1,846J/kg ·K, 0.441 kcal/kg ·°C), and ro represents the latent heat of evaporation of water at 0°C (2,501し入 103J/kg, 597.5kcal/kg).

A method of calculating the absolute humidity x is shown in Equation 2.

【Equation 2】

$$x=0.62198\frac{P_w}{P-P_w}$$

Here, P is the atmospheric pressure, and $P_w$ is the partial pressure of water vapor.

The atmospheric pressure P is calculated by Equation 3, and the water vapor partial pressure $P_w$ is calculated by Equation 4.

【Equation 3】

$$P=P_0[1-0.0065\frac{Z}{T_{0ab}}]^{5.256}$$

$$=P_0(1-2.2558 X 10^{-5}Z)^{5.256}$$

Here, Po is the atmospheric pressure at sea level of the standard atmosphere (=101.325kPa(760mmHg)), Z is the altitude above sea level (m), and $T_{0ab}$ is 288.15K (=15+273.15)

Where $T_{0ab}$ is the atmospheric pressure at sea level in the standard atmosphere.

【Equation 4】

$$P_w = \frac{RH}{100} P_{ws}$$

Here, RH is the relative humidity (%), Pws is the saturated water vapor pressure (kPa), and is calculated by Equation 5.

【Equation 5】

$$P_{ws}=[\exp(-5{,}800.2206/T_{ab}+1.3914993-0.048640239T_{ab} +0.41764768 \times 10^{-4}T_{ab}^{2}-0.14452093 \times 10^{-7}T_{ab}^{3} +6.5459673 \log_e(T_{ab}))]/1{,}000$$

Here, $T_{ab}$[k]=T+273.15.

When the enthalpy of the indoor air and the enthalpy of the outdoor air are respectively obtained by Equation 1, the difference in enthalpy between the indoor air and the outdoor air is calculated. The difference in enthalpy between the indoor air and the outdoor air may be referred to as enthalpy energy.

The enthalpy of the indoor air is compared with the enthalpy of the outdoor air (S9).

When the enthalpy of the outdoor air exceeds the enthalpy of the indoor air, the method returns to the operation (S1) of measuring the temperature and humidity not to introduce the outdoor air.

When the enthalpy of the outdoor air is less than or equal to the enthalpy of the indoor air, the temperature of the outdoor air is compared with a pre-set temperature of the indoor air (S10).

When the temperature of the outdoor air exceeds the set temperature of the indoor air, the method returns to the operation (S1) of measuring the temperature and humidity not to introduce the outdoor air.

When the temperature of the outdoor air is less than or equal to the set temperature of the indoor air, it is determined whether the relative humidity of the outdoor air is within a pre-set humidity range (S11).

When the relative humidity of the outdoor air is out of the pre-set humidity range, the method returns to the operation (S1) of measuring the temperature and humidity not to introduce the outdoor air.

When the relative humidity of the outdoor air is within the pre-set humidity range, the outdoor air introduction control mode (S100) is performed.

When the room of the closed plant factory is kept in a constant temperature and humidity state, the latent heat load for humidification or dehumidification increases when introducing the outdoor air, so that economic efficiency may be lowered. Therefore, it is controlled to introduce the outdoor air when the relative humidity of the outdoor air is within the pre-set humidity range.

Referring to FIG. 6, the outdoor air introduction control mode (S100) will be described.

In the outdoor air introduction control mode (S100), a difference between the temperature of the indoor air and the temperature of the outdoor air is calculated (S101).

When introducing the outdoor air, in order to prevent the plants from being stressed by a temperature change due to the introduction of the outdoor air, the supply amount of the outdoor air is differently controlled according to the difference between the temperature of the indoor air and the temperature of the outdoor air.

When the system for controlling an environment is the air conditioner-type system, the amount of air supply of the outdoor air is controlled by controlling the opening degree of the outdoor air damper and the exhaust damper, and when the system for controlling an environment is the packaged thermo-hygrostat type system, the amount of air supply of the outdoor air is controlled by performing control of the number of revolution or pole change of the air supply fan and the exhaust fan.

Therefore, it is determined whether the system for controlling an environment is the air conditioner-type system or the packaged thermo-hygrostat type system (S102).

In the case of the outdoor air introduction control mode and the air conditioner type, a method of controlling the system is as follows.

When the difference between the temperature of the indoor air and the temperature of the outdoor air is less than or equal to a pre-set minimum value, the exhaust damper, the outdoor air damper, and the circulating air damper are opened to a pre-set maximum opening degree (S103)(S104).

Here, an example in which the minimum value is 5°C and the maximum opening degree is 100% opening degree, will be described.

In addition, when the difference between the temperature of the indoor air and the temperature of the outdoor air exceeds the minimum value and is less than or equal to a pre-set maximum value, the exhaust damper, the outdoor air damper, and the circulating air damper are opened according to the opening rate set in proportion to the difference between the temperature of the indoor air and the temperature of the outdoor air (S105)(S106).

Here, an example in which the maximum value is 10°C, will be described.

Furthermore, when the difference between the temperature of the indoor air and the temperature of the outdoor air exceeds the maximum value, the exhaust damper, the outdoor air damper, and the circulating air damper are opened to a pre-set minimum opening degree (S107)(S108).

Here, the minimum opening degree is set in advance.

Meanwhile, in the case of the outdoor air introduction control mode and the packaged thermo-hygrostat type, the method of controlling the system is as follows.

The exhaust damper and the outdoor air damper are opened to a pre-set maximum opening degree (S111).

Here, an example in which the maximum opening degree is 100% opening degree, will be described.

In addition, when the difference between the temperature of the indoor air and the temperature of the outdoor air is less than or equal to a pre-set minimum value, the air supply fan and the exhaust fan are controlled to operate at a pre-set maximum operation rate (S112)(S113).

Here, an example in which the minimum value is 5°C and the maximum operation rate is 100%, will be described.

In addition, when the difference between the temperature of the indoor air and the temperature of the outdoor air exceeds the minimum value and is less than or equal to a pre-set maximum value, the air supply fan and the exhaust fan are controlled to operate at an operation rate set in proportion to the difference in temperature (S114)(S115).

Here, an example in which the maximum value is 10°C, will be described.

In addition, when the difference between the temperature of the indoor air and the temperature of the outdoor air exceeds the maximum value, the air supply fan and the exhaust fan are controlled to operate at a pre-set minimum operation rate (S116)(S117).

Here, the minimum operation rate is set in advance.

Meanwhile, when it is determined that the enthalpy control mode is not set and the indoor circulation mode (S200) is set in the enthalpy control mode checking operation (S8), the indoor circulation mode (S200) in which no outdoor air is introduced is performed.

Referring to FIG. 7, in the indoor circulation mode (S200), it is determined whether the system for controlling an environment is the air conditioner type or the packaged thermo-hygrostat type (S201).

In the case of the air conditioner-type system, all of the exhaust damper, the outdoor air damper, and the circulating air damper are closed (S202).

In the thermo-hygrostat type system, both the exhaust damper and the outdoor air damper are closed, and both the air supply fan and the exhaust fan are stopped (S203)(S204).

As described above, because, when the $CO_2$ concentration of the indoor air is within the range between the upper limit and the lower limit, the introduction of outdoor air is controlled by the difference in enthalpy between the indoor air and the outdoor air, suitable introduction of the outside door is possible, and energy can be saved through cooling by using the outdoor air.

In addition, by controlling outdoor air introduction control differently depending on the daytime mode in which the plants carry out a photosynthetic action and the night mode in which the plants only breathe, the outdoor air can be more efficiently introduced.

In addition, in the daytime mode, the indoor environment can be controlled as an optimal environment by considering the worker as well as the plants.

While the present invention has been particularly shown and described with reference to exemplary embodiments thereof, it will be understood by those of ordinary skill in the art that various changes in form and details may be made therein without departing from the spirit and scope of the present invention as defined by the following claims.

## INDUSTRIAL APPLICABILITY

By using the present invention, a system for controlling an environment of an air conditioner-type closed plant factory can be manufactured.

## Claims

1. A system for controlling an environment of an air conditioner-type closed plant factory in which a plurality of tray members for accommodating plants for pharmaceutical preparation are stacked and which is provided with artificial lighting for providing light energy to the plants, the system comprising:

   an outdoor air damper installed in an air supply duct for supplying air to a room of the closed plant factory and configured to control an inflow flow rate of an outdoor air introduced into the air supply duct;
   an exhaust damper installed in an exhaust duct for discharging air from the room and configured to control a flow rate of an indoor air discharged from the room;
   a circulating air damper installed in a connection duct for connecting the air supply duct and the exhaust duct and configured to control a flow rate of circulating air that is discharged from the room and then circulated back to the room;
   a $CO_2$ supply device configured to supplying $CO_2$ to the air introduced into the room;
   a humidification coil configured to humidify the air introduced into the room;
   a cold and hot water coil configured to heat or cool the air introduced into the room;
   an outdoor air sensor unit comprising an outdoor air temperature sensor measuring a temperature of the outdoor air, an outdoor air humidity sensor measuring a relative humidity of the outdoor air, and an outdoor air $CO_2$ sensor measuring a $CO_2$ concentration of the outdoor air;
   an indoor sensor unit comprising an indoor temperature sensor measuring a temperature of the indoor air, an indoor humidity sensor measuring a relative humidity of the indoor air, and an indoor $CO_2$ sensor measuring a $CO_2$ concentration of the indoor air;
   a human body detection sensor configured to detect a human body in the room; and
   a control unit, in a daytime mode in which the artificial lighting is turned on and the plants carry out photosynthesis, the human body is detected by the human body detection sensor, and when the $CO_2$ concentration measured by the indoor $CO_2$ sensor is higher than a pre-set upper limit, configured to perform an outdoor air introduction control mode in which ventilation is performed by setting an outdoor air introduction rate differently according to a difference between the temperature of the indoor air and the temperature of the outdoor air.

2. A system for controlling an environment of an air conditioner-type closed plant factory in which a plurality of tray members for accommodating plants for pharmaceutical preparation are stacked and which is provided with artificial lighting for providing light energy to the plants, the system comprising:

   an outdoor air damper installed in an air supply duct for supplying air to a room of the closed plant factory and configured to control an inflow flow rate of an outdoor air introduced into the air supply duct;
   an exhaust damper installed in an exhaust duct for discharging air from the room and configured to control a flow rate of an indoor air discharged from the room;
   a circulating air damper installed in a connection duct for connecting the air supply duct and the exhaust duct and configured to control a flow rate of circulating air that is discharged from the room and then circulated back to the room;
   a $CO_2$ supply device configured to supplying $CO_2$ to the air introduced into the room;
   a humidification coil configured to humidify the air introduced into the room;
   a cold and hot water coil configured to heat or cool the air introduced into the room;
   an outdoor air sensor unit comprising an outdoor air temperature sensor measuring a temperature of the outdoor air, an outdoor air humidity sensor measuring a relative humidity of the outdoor air, and an outdoor air $CO_2$ sensor measuring a $CO_2$ concentration of the outdoor air;
   an indoor sensor unit comprising an indoor temperature sensor measuring a temperature of the indoor air, an indoor humidity sensor measuring a relative humidity of the indoor air, and an indoor $CO_2$ sensor measuring a $CO_2$ concentration of the indoor air;
   a human body detection sensor configured to detect a human body in the room; and
   a control unit, in a night mode in which the artificial lighting is turned off and the plants breathe, configured to determine whether any one of an enthalpy control mode in which the outdoor air is introduced by comparing enthalpy of the indoor air with enthalpy of the outdoor air, and an indoor circulation mode in which the indoor air is circulated without introducing the outdoor air, is set and configured to control ventilation in the set mode.

3. A system for controlling an environment of an air conditioner-type closed plant factory in which a plurality of tray members for accommodating plants for pharmaceutical preparation are stacked and which is provided with artificial lighting for providing light energy to the plants, the system comprising:

an outdoor air damper installed in an air supply duct for supplying air to a room of the closed plant factory and configured to control an inflow flow rate of an outdoor air introduced into the air supply duct;
an exhaust damper installed in an exhaust duct for discharging air from the room and configured to control a flow rate of an indoor air discharged from the room;
a circulating air damper installed in a connection duct for connecting the air supply duct and the exhaust duct and configured to control a flow rate of circulating air that is discharged from the room and then circulated back to the room;
a $CO_2$ supply device configured to supplying $CO_2$ to the air introduced into the room;
a humidification coil configured to humidify the air introduced into the room;
a cold and hot water coil configured to heat or cool the air introduced into the room;
an outdoor air sensor unit comprising an outdoor air temperature sensor measuring a temperature of the outdoor air, an outdoor air humidity sensor measuring a relative humidity of the outdoor air, and an outdoor air $CO_2$ sensor measuring a $CO_2$ concentration of the outdoor air;
an indoor sensor unit comprising an indoor temperature sensor measuring a temperature of the indoor air, an indoor humidity sensor measuring a relative humidity of the indoor air, and an indoor $CO_2$ sensor measuring a $CO_2$ concentration of the indoor air;
a human body detection sensor configured to detect a human body in the room; and
a control unit configured to control ventilation of the closed plant factory by reflecting whether the artificial lighting is turned on or off and whether the human body is detected by the human body detection sensor.

**4.** A system for controlling an environment of an air conditioner-type closed plant factory in which a plurality of tray members for accommodating plants for pharmaceutical preparation are stacked and which is provided with artificial lighting for providing light energy to the plants, the system comprising:

an outdoor air damper installed in an air supply duct for supplying air to a room of the closed plant factory and configured to control an inflow flow rate of an outdoor air introduced into the air supply duct;
an exhaust damper installed in an exhaust duct for discharging air from the room and configured to control a flow rate of an indoor air discharged from the room;
a circulating air damper installed in a connection duct for connecting the air supply duct and the exhaust duct and configured to control a flow rate of circulating air that is discharged from the room and then circulated back to the room;
a $CO_2$ supply device configured to supplying $CO_2$ to the air introduced into the room;
a humidification coil configured to humidify the air introduced into the room;
a cold and hot water coil configured to heat or cool the air introduced into the room;
an outdoor air sensor unit comprising an outdoor air temperature sensor measuring a temperature of the outdoor air, an outdoor air humidity sensor measuring a relative humidity of the outdoor air, and an outdoor air $CO_2$ sensor measuring a $CO_2$ concentration of the outdoor air;
an indoor sensor unit comprising an indoor temperature sensor measuring a temperature of the indoor air, an indoor humidity sensor measuring a relative humidity of the indoor air, and an indoor $CO_2$ sensor measuring a $CO_2$ concentration of the indoor air;
a human body detection sensor configured to detect a human body in the room; and
a control unit configured to control ventilation of the closed plant factory by reflecting whether the artificial lighting is turned on or off, whether the human body is detected by the human body detection sensor, and the $CO_2$ concentration measured by the indoor $CO_2$ sensor.

**5.** A system for controlling an environment of an air conditioner-type closed plant factory in which a plurality of tray members for accommodating plants for pharmaceutical preparation are stacked and which is provided with artificial lighting for providing light energy to the plants, the system comprising:

an outdoor air damper installed in an air supply duct for supplying air to a room of the closed plant factory and configured to control an inflow flow rate of an outdoor air introduced into the air supply duct;
an exhaust damper installed in an exhaust duct for discharging air from the room and configured to control a flow rate of an indoor air discharged from the room;
a circulating air damper installed in a connection duct for connecting the air supply duct and the exhaust duct and configured to control a flow rate of circulating air that is discharged from the room and then circulated back to the room;
a $CO_2$ supply device configured to supplying $CO_2$ to the air introduced into the room;
a humidification coil configured to humidify the air introduced into the room;

a cold and hot water coil configured to heat or cool the air introduced into the room;
an outdoor air sensor unit comprising an outdoor air temperature sensor measuring a temperature of the outdoor air, an outdoor air humidity sensor measuring a relative humidity of the outdoor air, and an outdoor air $CO_2$ sensor measuring a $CO_2$ concentration of the outdoor air;
an indoor sensor unit comprising an indoor temperature sensor measuring a temperature of the indoor air, an indoor humidity sensor measuring a relative humidity of the indoor air, and an indoor $CO_2$ sensor measuring a $CO_2$ concentration of the indoor air;
a human body detection sensor configured to detect a human body in the room; and
a control unit configured to control ventilation of the closed plant factory by reflecting whether the artificial lighting is turned on or off, whether the human body is detected by the human body detection sensor, the enthalpy of the indoor air, and the enthalpy of the outdoor air.

**6.** The system of claim 1, in the daytime mode, wherein the control unit determines whether an enthalpy control mode in which the outdoor air is introduced by comparing enthalpy of the indoor air with enthalpy of the outdoor air, is set when, the human body is detected by the human body detection sensor and the $CO_2$ concentration measured by the indoor $CO_2$ sensor is less than the upper limit and is greater than or equal to the lower limit, and
when it is determined that the enthalpy control mode is set, the control unit calculates and compares the enthalpy of the indoor air and the enthalpy of the outdoor air,
when the enthalpy of the outdoor air is less than or equal to the enthalpy of the indoor air, the control unit compares temperature of the outdoor air with a pre-set temperature of the indoor air,
when the temperature of the outdoor air is less than or equal to the pre-set temperature of the indoor air, the control unit determines whether a relative humidity of the outdoor air is within a pre-set humidity range, and
when the relative humidity of the outdoor air is within the pre-set humidity range, the control unit performs the outdoor air introduction control mode.

**7.** The system of claim 6, in the outdoor air introduction control mode,
wherein the control unit opens the exhaust damper, the outdoor air damper, and the circulating air damper to a pre-set maximum opening degree, when outdoor air a difference between the temperature of the indoor air and the temperature of the outdoor air is less than or equal to a pre-set minimum value,
when the difference between the temperature of the indoor air and the temperature of the outdoor air exceeds the minimum value and is less than or equal to a pre-set maximum value, the control unit opens the exhaust damper, the outdoor air damper, and the circulating air damper according to an opening rate set in proportion to the difference in temperature,
when the difference between the temperature of the indoor air and the temperature of the outdoor air exceeds the maximum value, the control unit opens the exhaust damper, the outdoor air damper, and the circulating air damper to a pre-set minimum opening degree.

**8.** The system of claim 2, wherein, when it is determined that the enthalpy control mode is set, the control unit calculates and compares the enthalpy of the indoor air and the enthalpy of the outdoor air, and
when the enthalpy of the outdoor air is less than or equal to the enthalpy of the indoor air, the control unit compares the temperature of the outdoor air with a pre-set temperature of the indoor air, and
when the temperature of the outdoor air is less than or equal to the pre-set temperature of the indoor air, the control unit determines whether a relative humidity of the outdoor air is within a pre-set humidity range, and
when the relative humidity of the outside is within the pre-set humidity range, the control unit performs the outdoor air introduction control mode.

**9.** The system of claim 2, wherein, when it is determined that the indoor circulation mode is set, the control unit closes all of the exhaust damper, the outdoor air damper, and the circulating air damper.

**10.** A method of controlling an environment of an air conditioner-type closed plant factory, the method comprising:

when a closed plant factory for cultivating plants for pharmaceutical preparation is controlled in an air-conditioner type by including an outdoor air damper installed in an air supply duct for supplying air to a room of the closed plant factory and configured to control an inflow flow rate of an outdoor air introduced into the air supply duct, an exhaust damper installed in an exhaust duct for discharging air from the room and configured to control a flow rate of an indoor air discharged from the room, a circulating air damper installed in a connection duct for connecting the air supply duct and the exhaust duct and configured to control a flow rate of circulating air that is discharged from the room and then circulated back to the room, a $CO_2$ supply device configured to supplying

$CO_2$ to the air introduced into the room, a humidification coil installed in the air supply duct and configured to humidify the air introduced into the room, and a cold and hot water coil installed in the air supply duct and configured to heat or cool the air introduced into the room,
a temperature/humidity measuring operation of measuring temperature and relative humidity of the indoor air at predetermined time intervals and measuring temperature and relative humidity of the outdoor air of the closed plant factory at predetermined time intervals, by using a sensor unit;
a night/daytime setting operation of setting any one of a daytime mode in which an artificial lighting provided in the room of the closed plant factory is turned on and photosynthesis of the plants is carried out, and a night mode in which the artificial lighting is turned off and only breathing of the plants is carried out, by using a control unit;
a human body detecting operation of determining whether a human body is detected by a human body detection sensor in the room when the daytime mode is set in the night/daytime setting operation;
a $CO_2$ concentration measuring operation of measuring $CO_2$ concentration of the indoor air at predetermined time intervals when the human body is detected in the human body detecting operation, by using a $CO_2$ sensor;
an operation of performing an outdoor air introduction control mode in which the control unit sets an outdoor air introduction rate differently according to a difference between temperature of the indoor air and temperature of the outdoor air and performs ventilation, when the $CO_2$ concentration of the indoor air measured in the $CO_2$ concentration measuring operation is greater than or equal to a pre-set upper limit;
an enthalpy control mode checking operation of checking whether any one of an enthalpy control mode in which the outdoor air is introduced by comparing enthalpy of the indoor air with enthalpy of the outdoor air and an indoor circulation mode in which the indoor air is circulated without introducing the outdoor air, is set when the $CO_2$ concentration of the indoor air measured in the $CO_2$ concentration measuring operation is less than the upper limit and is greater than or equal to a pre-set lower limit;
when it is determined that the enthalpy control mode is set in the enthalpy control mode checking operation, calculating enthalpy of the indoor air and enthalpy of the outdoor air and determining whether to perform the outdoor air introduction control mode according to the enthalpy of the indoor air, the enthalpy of the outdoor air, the temperature of the outdoor air, and the relative humidity of the outdoor air; and
when the night mode is set in the night/daytime setting operation, checking whether any one of the enthalpy control mode and the indoor circulation mode is set, by using the control unit.

**11.** The method of claim 10, wherein, when the human body is not detected in the human body detecting operation, the control unit determines whether indoor $CO_2$ concentration is greater than or equal to the lower limit, and when the indoor $CO_2$ concentration is greater than or equal to the lower limit, the control unit checks whether any one of the enthalpy control mode and the indoor circulation mode is set.

**12.** The method of claim 10, wherein, when it is determined that the enthalpy control mode is set in the enthalpy control mode checking operation, the enthalpy of the indoor air and the enthalpy of the outdoor air are calculated and compared, and when the enthalpy of the outdoor air is less than or equal to the enthalpy of the indoor air, the temperature of the outdoor air is compared with a pre-set temperature of the indoor air, and when the temperature of the outdoor air is less than or equal to the pre-set temperature of the indoor air, it is determined whether a relative humidity of the outdoor air is within a pre-set humidity range, and when the relative humidity of the outdoor air is within the pre-set humidity range, the outdoor air introduction control mode is performed.

**13.** The method of claim 10, wherein, in the outdoor air introduction control mode, when a difference between the temperature of the indoor air and the temperature of the outdoor air is less than or equal to a pre-set minimum value, the exhaust damper, the outdoor air damper, and the circulating air damper are opened to a pre-set maximum opening degree.

**14.** The method of claim 13, wherein, in the outdoor air introduction control mode, when the difference between the temperature of the indoor air and the temperature of the outdoor air exceeds the minimum value and is less than or equal to a pre-set maximum value, the exhaust damper, the outdoor air damper, and the circulating air damper are opened according to an opening rate set in proportion to the difference between the temperature of the indoor air and the temperature of the outdoor air.

**15.** The method of claim 14, wherein, in the outdoor air introduction control mode, when the difference between the temperature of the indoor air and the temperature of the outdoor air exceeds the maximum value, the exhaust damper, the outdoor air damper, and the circulating air damper are opened to a pre-set minimum opening degree.

**16.** The method of claim 13, wherein, when it is determined that the indoor circulation mode is set in the enthalpy control mode checking operation, all of the exhaust damper, the outdoor air damper, and the circulating air damper are closed.

FIG. 1

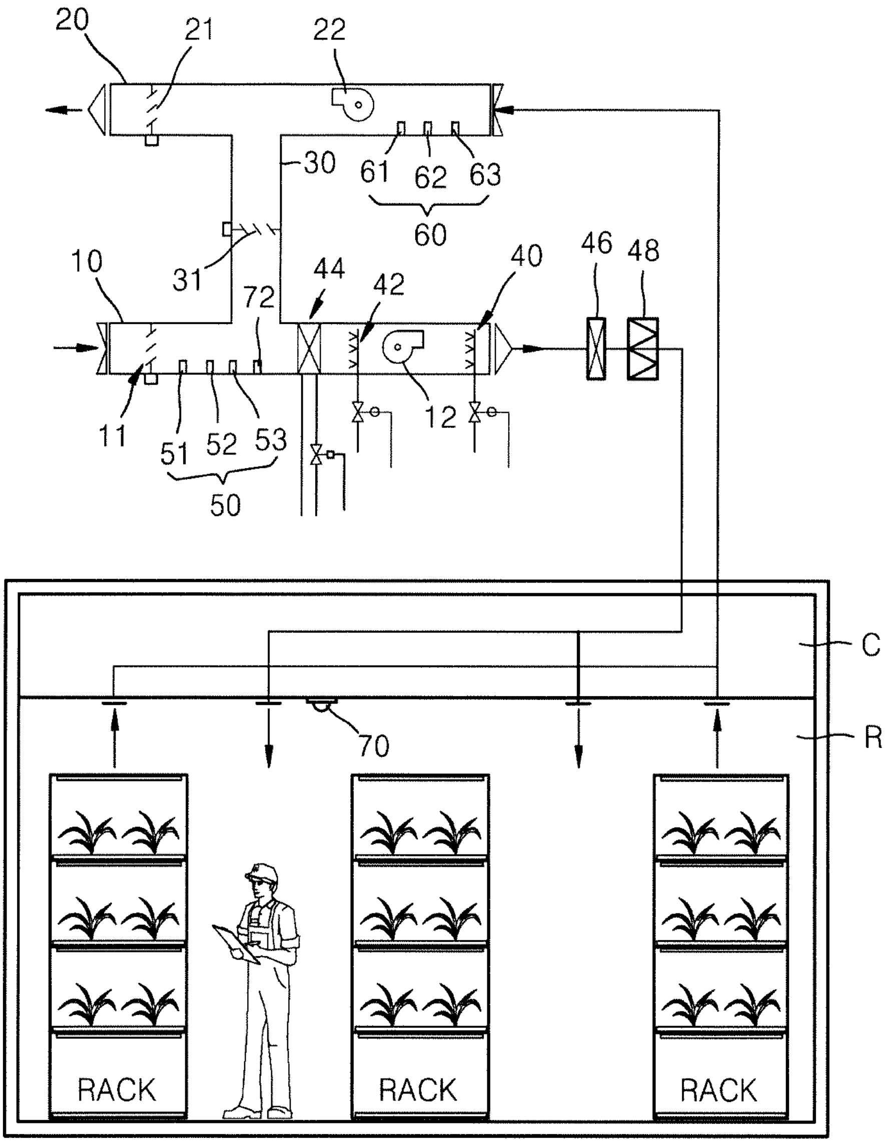
20
21
22
30
61
62
63
60
10
31
72
44
42
40
46
48
11
51
52
53
50
12
C
70
R
RACK
RACK
RACK

FIG. 2

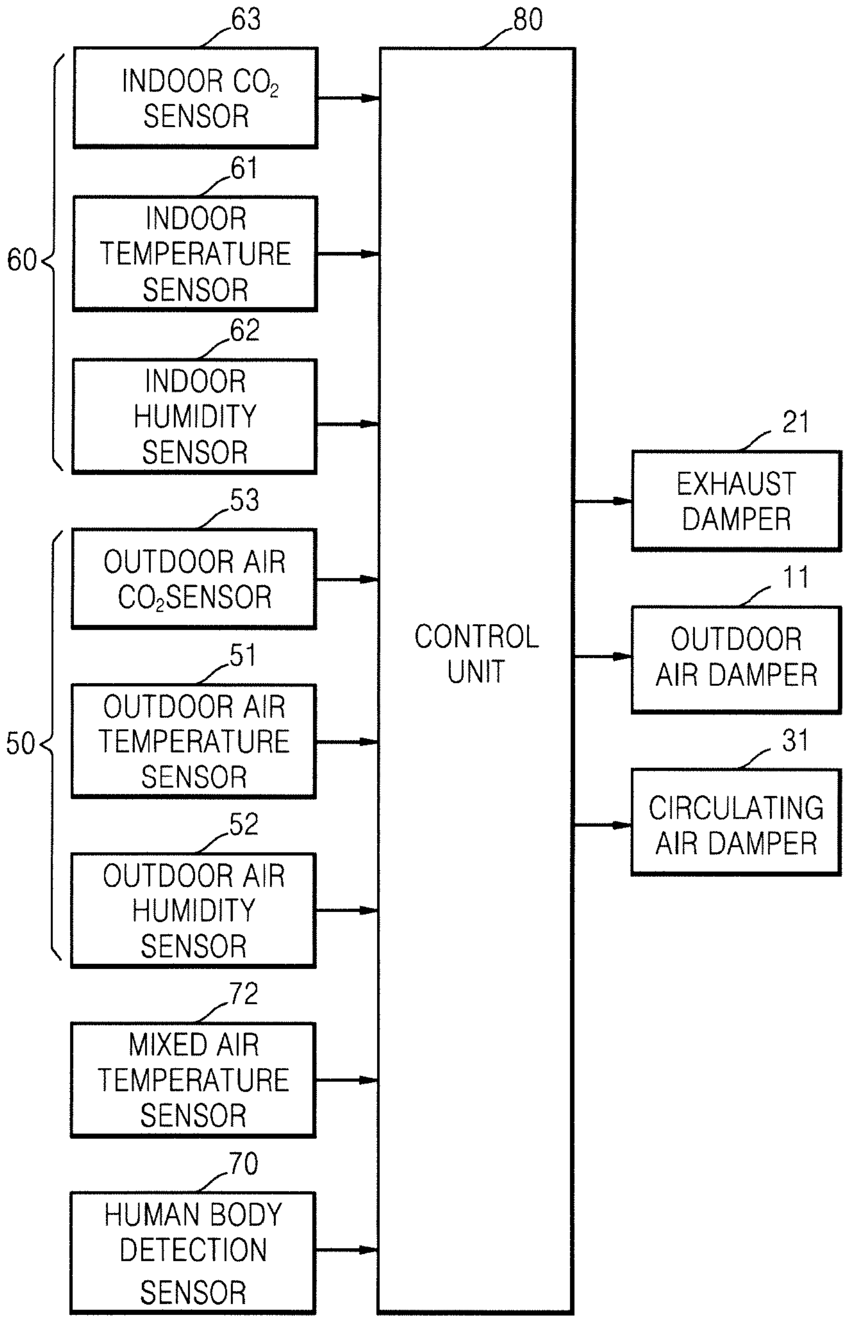
63
INDOOR $CO_2$ SENSOR
61
INDOOR TEMPERATURE SENSOR
62
INDOOR HUMIDITY SENSOR
60
53
OUTDOOR AIR $CO_2$SENSOR
51
OUTDOOR AIR TEMPERATURE SENSOR
52
OUTDOOR AIR HUMIDITY SENSOR
50
72
MIXED AIR TEMPERATURE SENSOR
70
HUMAN BODY DETECTION SENSOR
80
CONTROL UNIT
21
EXHAUST DAMPER
11
OUTDOOR AIR DAMPER
31
CIRCULATING AIR DAMPER

FIG. 3

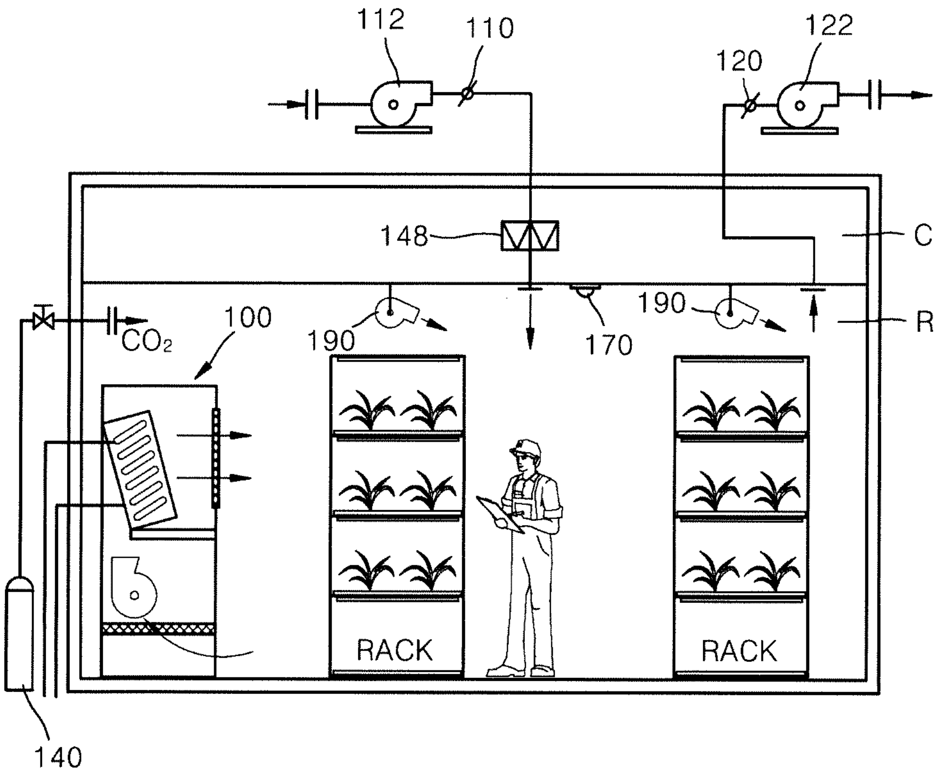

FIG. 4

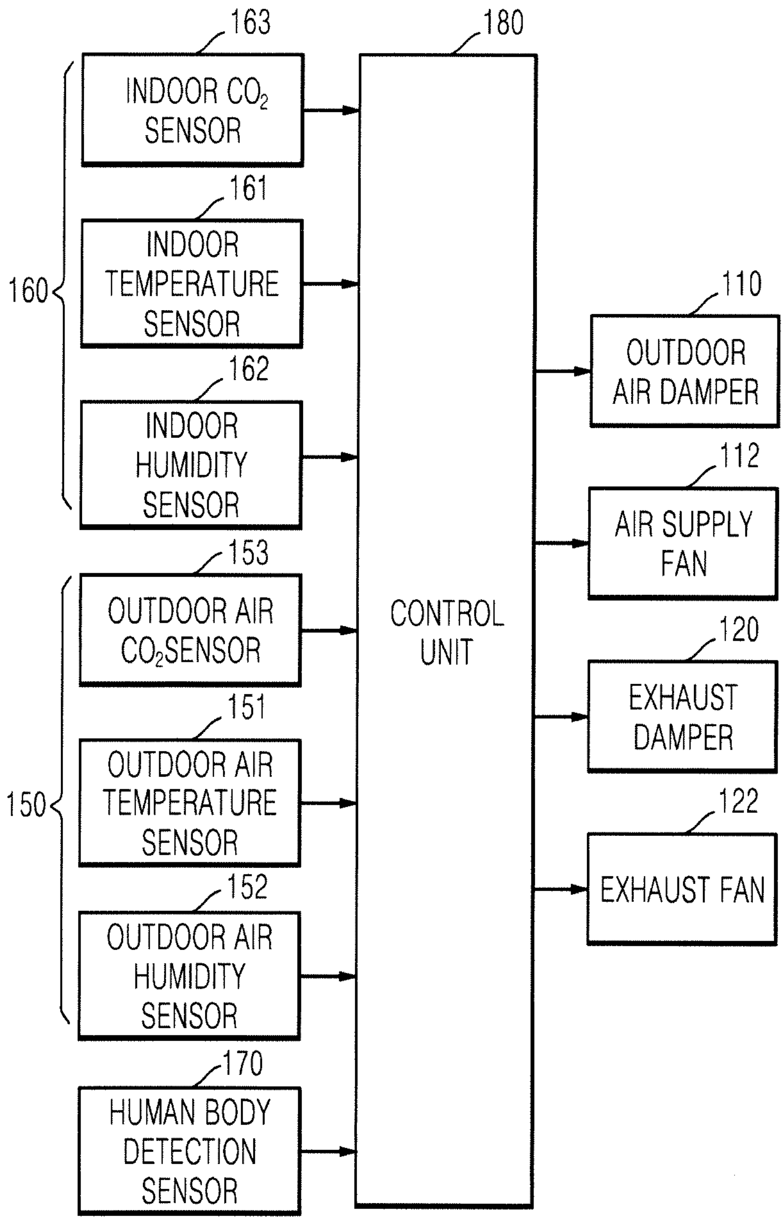
163
INDOOR CO2 SENSOR
161
INDOOR TEMPERATURE SENSOR
162
INDOOR HUMIDITY SENSOR
160
153
OUTDOOR AIR CO2SENSOR
151
OUTDOOR AIR TEMPERATURE SENSOR
152
OUTDOOR AIR HUMIDITY SENSOR
150
170
HUMAN BODY DETECTION SENSOR
180
CONTROL UNIT
110
OUTDOOR AIR DAMPER
112
AIR SUPPLY FAN
120
EXHAUST DAMPER
122
EXHAUST FAN

FIG. 5

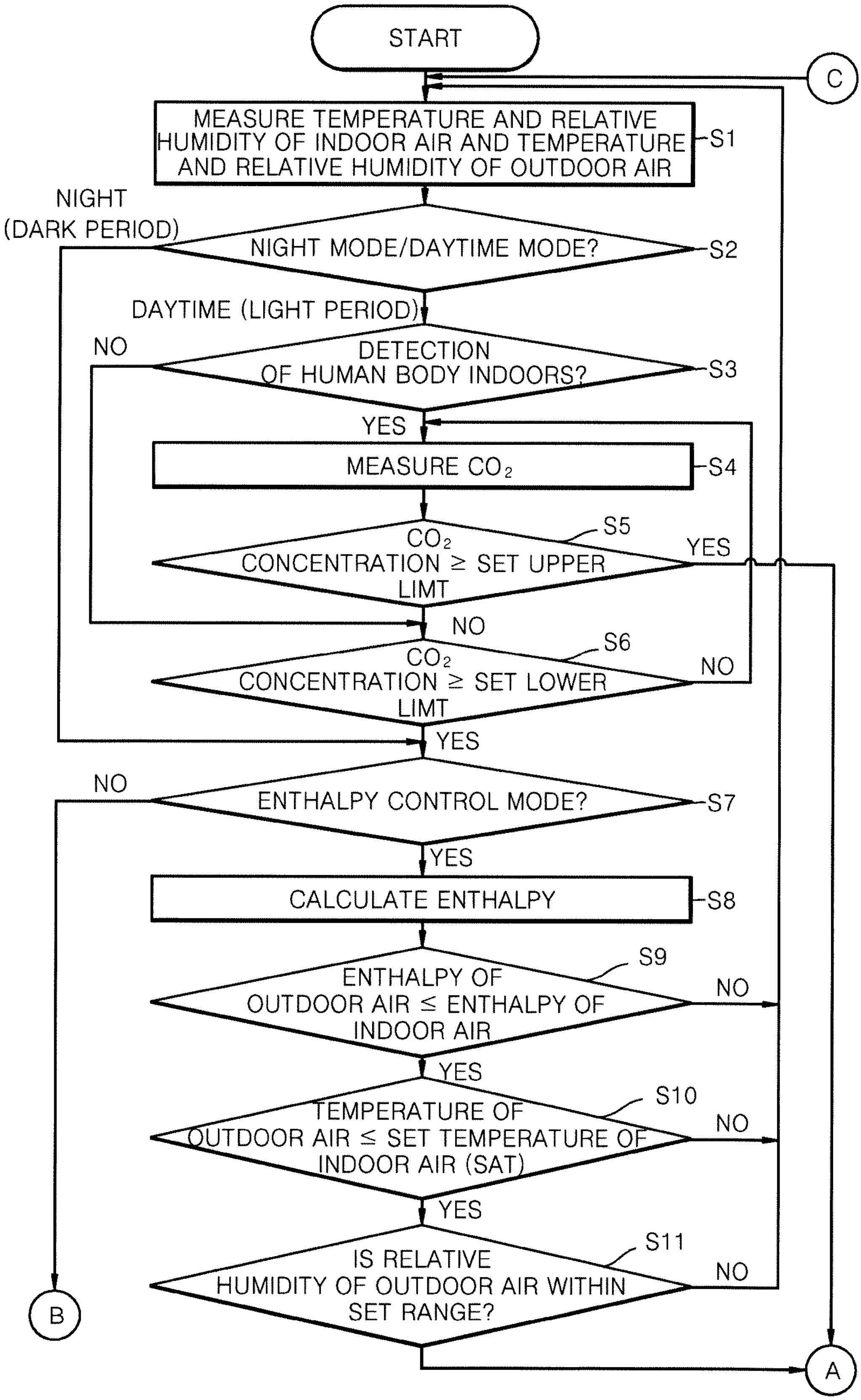
START
C
MEASURE TEMPERATURE AND RELATIVE HUMIDITY OF INDOOR AIR AND TEMPERATURE AND RELATIVE HUMIDITY OF OUTDOOR AIR
S1
NIGHT (DARK PERIOD)
NIGHT MODE/DAYTIME MODE?
S2
DAYTIME (LIGHT PERIOD)
NO
DETECTION OF HUMAN BODY INDOORS?
S3
YES
MEASURE $CO_2$
S4
S5
$CO_2$ CONCENTRATION ≥ SET UPPER LIMT
YES
NO
S6
$CO_2$ CONCENTRATION ≥ SET LOWER LIMT
NO
YES
NO
ENTHALPY CONTROL MODE?
S7
YES
CALCULATE ENTHALPY
S8
S9
ENTHALPY OF OUTDOOR AIR ≤ ENTHALPY OF INDOOR AIR
NO
YES
S10
TEMPERATURE OF OUTDOOR AIR ≤ SET TEMPERATURE OF INDOOR AIR (SAT)
NO
YES
S11
IS RELATIVE HUMIDITY OF OUTDOOR AIR WITHIN SET RANGE?
NO
B
A

FIG. 6

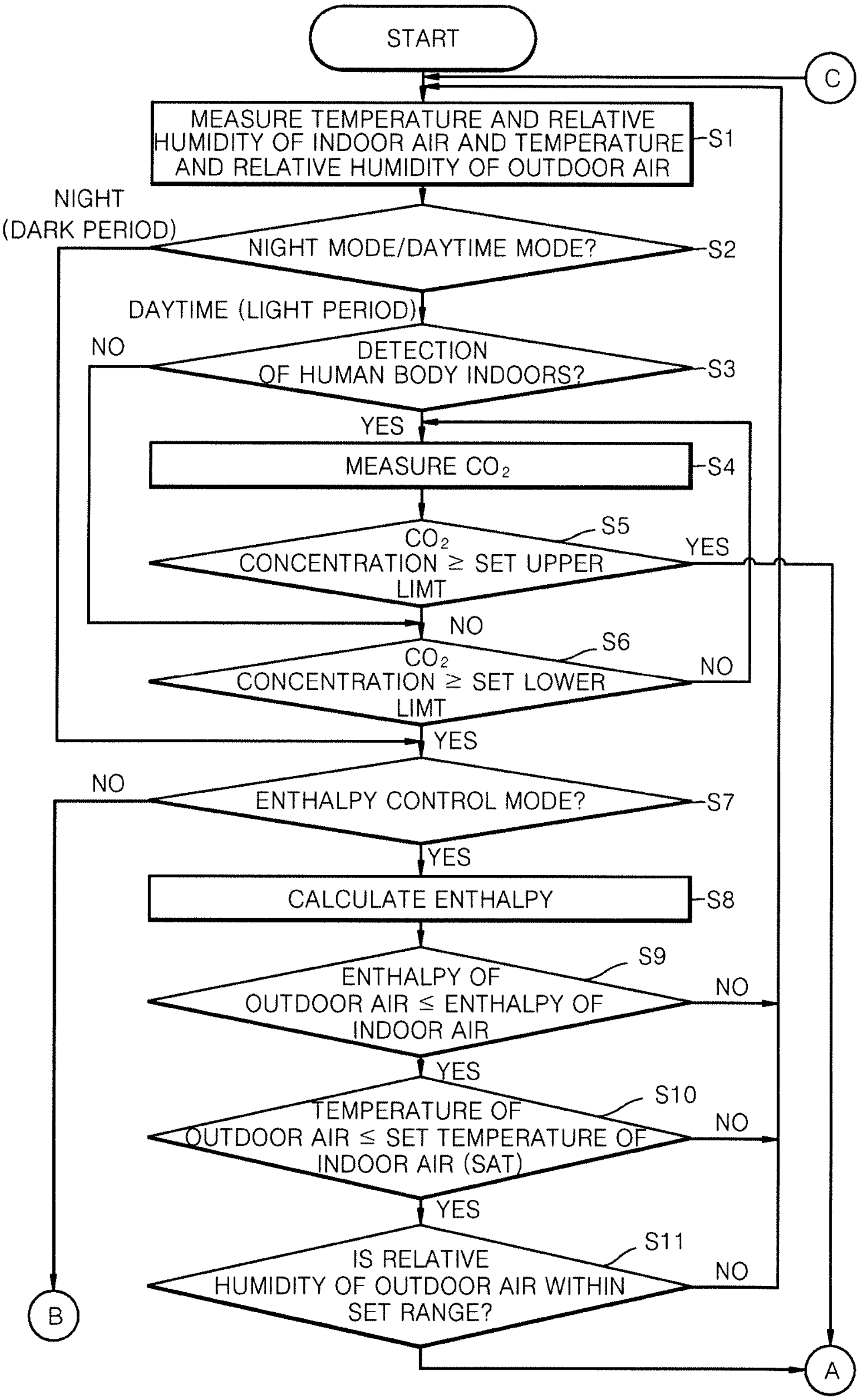
START
C
MEASURE TEMPERATURE AND RELATIVE HUMIDITY OF INDOOR AIR AND TEMPERATURE AND RELATIVE HUMIDITY OF OUTDOOR AIR
S1
NIGHT (DARK PERIOD)
NIGHT MODE/DAYTIME MODE?
S2
DAYTIME (LIGHT PERIOD)
NO
DETECTION OF HUMAN BODY INDOORS?
S3
YES
MEASURE $CO_2$
S4
S5
$CO_2$ CONCENTRATION ≥ SET UPPER LIMT
YES
NO
S6
$CO_2$ CONCENTRATION ≥ SET LOWER LIMT
NO
YES
NO
ENTHALPY CONTROL MODE?
S7
YES
CALCULATE ENTHALPY
S8
S9
ENTHALPY OF OUTDOOR AIR ≤ ENTHALPY OF INDOOR AIR
NO
YES
S10
TEMPERATURE OF OUTDOOR AIR ≤ SET TEMPERATURE OF INDOOR AIR (SAT)
NO
YES
S11
IS RELATIVE HUMIDITY OF OUTDOOR AIR WITHIN SET RANGE?
NO
B
A

FIG. 7

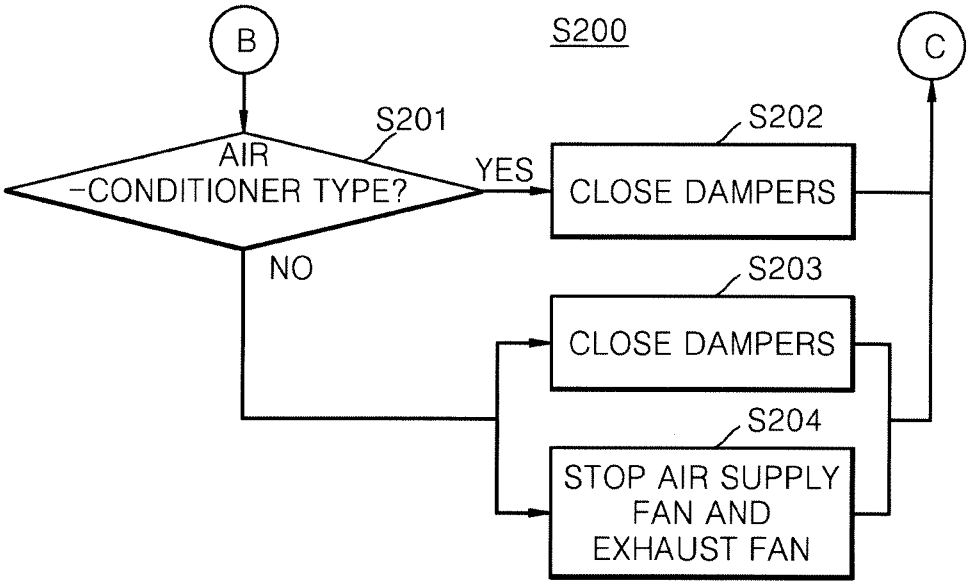
B
S200
C
S201
AIR
-CONDITIONER TYPE?
YES
NO
S202
CLOSE DAMPERS
S203
CLOSE DAMPERS
S204
STOP AIR SUPPLY
FAN AND
EXHAUST FAN

## INTERNATIONAL SEARCH REPORT

International application No.
PCT/KR2019/009277

A. CLASSIFICATION OF SUBJECT MATTER

*A01G 9/24(2006.01)i, A01G 9/18(2006.01)i, A01G 7/04(2006.01)i, A01G 7/02(2006.01)i, A01G 9/20(2006.01)i*

According to International Patent Classification (IPC) or to both national classification and IPC

B. FIELDS SEARCHED

Minimum documentation searched (classification system followed by classification symbols)
A01G 9/24; A01G 18/00; A01G 31/06; A01G 7/02; A01G 7/04; F24F 7/06; G06Q 50/02; A01G 9/18; A01G 9/20

Documentation searched other than minimum documentation to the extent that such documents are included in the fields searched
Korean utility models and applications for utility models: IPC as above
Japanese utility models and applications for utility models: IPC as above

Electronic data base consulted during the international search (name of data base and, where practicable, search terms used)
eKOMPASS (KIPO internal) & Keywords: air damper, air conditioner, closed-type, plant factory, environmental control, carbon dioxide(CO2), enthalpy, sensor

C. DOCUMENTS CONSIDERED TO BE RELEVANT

| Category* | Citation of document, with indication, where appropriate, of the relevant passages | Relevant to claim No. |
|---|---|---|
| A | KR 10-1889217 B1 (LEE, Gyu-do) 16 August 2018<br>See paragraphs [0021]-[0121]; claims 1-2, 6-7; figures 1-7. | 1-16 |
| A | JP 2011-015655 A (DYNA AIR KK.) 27 January 2011<br>See the entire document. | 1-16 |
| A | KR 10-2015-0042429 A (SINNONG CO., LTD.) 21 April 2015<br>See the entire document. | 1-16 |
| A | KR 10-1703170 B1 (R2FARMS) 07 February 2017<br>See the entire document. | 1-16 |
| A | KR 10-1869890 B1 (XTREME FARM CO., LTD.) 23 July 2018<br>See the entire document. | 1-16 |
| PX | KR 10-1931750 B1 (G+FLAS LIFE SCIENCES) 24 December 2018<br>See claims 1-16.<br>※ The above document is the registered document for the priority of the present international application. | 1-16 |
| PX | KR 10-1926644 B1 (G+FLAS LIFE SCIENCES) 07 March 2019<br>See claims 1-19.<br>※ The above document is the registered document for the priority of the present international application. | 1-16 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 29 OCTOBER 2019 (29.10.2019) | **29 OCTOBER 2019 (29.10.2019)** |

Name and mailing address of the ISA/KR
Korean Intellectual Property Office
Government Complex Daejeon Building 4, 189, Cheongsa-ro, Seo-gu, Daejeon, 35208, Republic of Korea
Facsimile No. +82-42-481-8578

Authorized officer

Telephone No.

Form PCT/ISA/210 (second sheet) (January 2015)

**INTERNATIONAL SEARCH REPORT**
Information on patent family members

International application No.
**PCT/KR2019/009277**

| Patent document cited in search report | Publication date | Patent family member | Publication date |
|---|---|---|---|
| KR 10-1889217 B1 | 16/08/2018 | None | |
| JP 2011-015655 A | 27/01/2011 | JP 4647018 B2<br>WO 2011-004596 A1 | 09/03/2011<br>13/01/2011 |
| KR 10-2015-0042429 A | 21/04/2015 | KR 10-1555493 B1 | 24/09/2015 |
| KR 10-1703170 B1 | 07/02/2017 | None | |
| KR 10-1869890 B1 | 23/07/2018 | None | |
| KR 10-1931750 B1 | 24/12/2018 | None | |
| KR 10-1926644 B1 | 07/03/2019 | None | |

Form PCT/ISA/210 (patent family annex) (January 2015)